# EUROPEAN PATENT APPLICATION

(11) **EP 4 471 911 A1**
(43) Date of publication of application: **04.12.2024**
(21) Application number: 24172461.6
(22) Date of filing: 25.04.2024
(51) Int. Cl.: H01M 4/86, H01M 4/92, H01M 8/10

(54) **METHOD FOR PREPARING FUEL CELL CATALYST ELECTRODE AND FUEL CELL CATALYST ELECTRODE PREPARED THEREFROM**

(30) Priority: 23.05.2023 KR 20230066553
(71) Applicant: Hyundai Motor Company, Seoul (KR); Kia Corporation, Seoul (KR)
(72) Inventor: SHIN, Ju Ho, 16891 Yongin-si, Gyeonggi-do (KR); CHOI, Seung Kyu, 16891 Yongin-si, Gyeonggi-do (KR); LEE, Sung Chul, 16891 Yongin-si, Gyeonggi-do (KR); LEE, Jin Hwa, 16891 Yongin-si, Gyeonggi-do (KR); LEE, Kyung Jin, 16891 Yongin-si, Gyeonggi-do (KR); LEE, Hyo June, 16891 Yongin-si, Gyeonggi-do (KR)
(74) Representative: Viering, Jentschura & Partner mbB Patent- und Rechtsanwälte

(57) **Abstract**

The present invention relates to a fuel cell catalyst electrode including a catalyst layer including a catalyst, a binder, carbon nanotubes, and carbon nanofibers, wherein the carbon nanotubes have an average length of 100 nm to 1 µm, the carbon nanofibers have an average length of 7 µm to 50 µm, and the fuel cell catalyst electrode includes the carbon nanofibers in an amount of 7.5 to 11.5 parts by weight with respect to 100 parts by weight of the catalyst, and a method for preparing the same.

## Description

### CROSS-REFERENCE TO RELATED APPLICATIONS

This application claims the priority of Korean Patent Application No. 10-2023-0066553 filed on May 23, 2023, in the Korean Intellectual Property Office, the disclosure of which is incorporated herein by reference.

### BACKGROUND OF THE INVENTION

### Field of the Invention

The present invention relates to a fuel cell catalyst electrode and a method for preparing a fuel cell catalyst electrode, and more particularly, to a crack-free fuel cell catalyst electrode prepared through a direct electrolyte membrane coating method and a method for preparing a fuel cell catalyst electrode capable of reducing the possibility of generating cracks.

### Description of the Related Art

Fuel cells serve to electrochemically oxidize fuels, such as hydrogen and methanol, in cells to convert chemical energy of the fuels into electrical energy. In particular, a polymer electrolyte membrane fuel cell (PEFC) uses a solid polymer electrolyte membrane having ion conductivity to enable low-temperature operation compared to high-temperature operation fuel cells such as a solid oxide fuel cell (SOFC) and make a simple system applicable, so that the PEFC is used as a power source for vehicles, buildings, and the like.

The polymer electrolyte membrane fuel cell includes a membrane electrode assembly (MEA) including a negative electrode (a hydrogen electrode), a positive electrode (an air electrode), and a hydrogen ion conductive polymer electrolyte membrane. In this case, the negative electrode (the hydrogen electrode) and the positive electrode (the air electrode) are each present in the form in which homogeneous or heterogeneous noble metal catalysts capable of causing an oxidation reaction of fuel and a reduction reaction of oxygen are evenly dispersed on a surface of a porous support element. Catalysts show differences in charge transfer resistance and the like by type, and also show differences in water discharge characteristics and the like due to physical properties such as hydrophobicity and specific surface area derived from the surface shape of catalysts.

A method of adding carbon nanotubes to the negative electrode (hydrogen electrode) and the positive electrode (air electrode) of the membrane electrode assembly is used to improve electrical conductivity, and when the carbon nanotubes are added, an electrode layer may have improved strength. However, when the method of adding carbon nanotubes is applied to a method of directly applying an electrode layer onto an electrolyte membrane, an electrode layer having a stable structure is hardly formed, thereby causing cracks on a surface of the electrode layer.

In this regard, there is a need to develop a method for preparing a more three-dimensional and robust electrode layer by removing cracks that may be generated in the electrode layer, and a fuel cell catalyst electrode including the electrode layer prepared according to the method.

### [Related Art Document]

### [Patent Document]

(Patent Document 1) KR 2022-0057028 A

### SUMMARY OF THE INVENTION

An aspect of the present invention provides a fuel cell catalyst electrode, particularly a fuel cell catalyst electrode having excellent catalyst activity in a positive electrode (air electrode), improved electrical conductivity, and improved electrode surface resulting from reduced crack generation in an electrode layer.

Another aspect of the present invention provides a method for preparing a fuel cell catalyst electrode, particularly a fuel cell catalyst electrode having excellent catalyst activity in a positive electrode (air electrode), improved electrical conductivity, and improved electrode surface resulting from reduced crack generation in an electrode layer.

To solve the tasks described above, the present invention provides a fuel cell catalyst electrode and a method for preparing the fuel cell catalyst electrode.
[1] According to an aspect of the present invention, there is provide a fuel cell catalyst electrode including a catalyst layer including a catalyst, a binder, carbon nanotubes, and carbon nanofibers, wherein the carbon nanotubes have an average length of 100 nm to 1 µm, the carbon nanofibers have an average length of 7 µm to 50 µm, and the fuel cell catalyst electrode includes the carbon nanofibers in an amount of 7.5 to 11.5 parts by weight with respect to 100 parts by weight of the catalyst.
[2] The present invention provides the fuel cell catalyst electrode according to [1] above, wherein the first catalyst includes a catalyst metal and porous activated carbon having the catalyst metal supported thereon, and the second catalyst includes a catalyst metal and carbon nanotubes having the catalyst metal supported thereon.
[3] The present invention provides the fuel cell catalyst electrode according to [2] above, wherein the porous activated carbon includes at least one selected from the group consisting of carbon black, graphite, graphene, activated carbon, and porous carbon.
[4] The present invention provides the fuel cell catalyst electrode according to [2] or [3] above, wherein the platinum-based alloy is an alloy of platinum and at least one selected from gold, silver, copper, palladium, tin, iridium, rhodium, ruthenium, iron, cobalt, nickel, chromium, tungsten, manganese, and vanadium.
[5] The present invention provides the fuel cell catalyst electrode according to any one of [1] to [4] above, wherein the binder is an ion conductive polymer.
[6] The present invention provides the fuel cell catalyst electrode according to any one of [1] to [5] above, wherein the carbon nanotubes have an average diameter of 5 to 100 nm.
[7] The present invention provides the fuel cell catalyst electrode according to any one of [1] to [6] above, wherein the carbon nanofibers are herringbone-type carbon nanofibers.
[8] The present invention provides the fuel cell catalyst electrode according to any one of [1] to [7] above, wherein the carbon nanofibers have an average diameter of 100 nm to 200 nm.
[9] The present invention provides the fuel cell catalyst electrode according to any one of [1] to [8] above, wherein the carbon nanofibers have a specific surface area of 30 to 80 m²/g.
[10] According to another aspect of the present invention, there is provided a method for preparing a fuel cell catalyst electrode, the method including supporting a catalyst metal on porous activated carbon to prepare a first catalyst (S10), supporting a catalyst metal on carbon nanotubes to prepare a second catalyst (S11), dispersing and mixing a catalyst comprising the first catalyst and the second catalyst, a binder, and carbon nanofibers in a solvent to prepare a catalyst slurry (S20), and applying the catalyst slurry onto a substrate to form a catalyst layer (S30), wherein the carbon nanofibers are mixed in an amount of 7.5 to 11.5 parts by weight with respect to 100 parts by weight of the catalyst, the carbon nanotubes have an average length of 100 nm to 1 µm, and the carbon nanofibers have an average length of 7 µm to 50 µm.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a view showing herringbone-type carbon nanofibers;
FIG. 2 is an SEM image of an electrode prepared in Example 1, and the SEM images shown at the top and bottom left are cross-sectional images of the electrode, and the SEM image shown at the bottom right is an image of a surface of an electrode catalyst layer;
FIG. 3 is an SEM image of an electrode prepared in Comparative Example 1, and the SEM images shown at the top and bottom left are cross-sectional images of the electrode, and the SEM image shown at the bottom right is an image of a surface of an electrode catalyst layer;
FIG. 4 is an SEM image of a surface of an electrode catalyst layer prepared in Example 1; and
FIG. 5 is an SEM image of a surface of an electrode catalyst prepared in Comparative Example 5.

### DETAILED DESCRIPTION OF THE PREFERRED EMBODIMENT

Exemplary embodiments of the present invention will now be described in detail with reference to the accompanying drawings.

Hereinafter, the present invention will be described in detail to aid in understanding of the present invention.

The terminology used herein is for the purpose of describing particular example embodiments only and is not intended to be limiting of the present invention. The singular forms are intended to include the plural forms as well, unless the context clearly indicates otherwise.

As used herein, numbers such as terms 'first' and 'second' are only numbers arbitrarily directed to easily distinguish components, and do not provide a special meaning to each component.

As used herein, "%" refers to wt% unless indicated otherwise.

As used herein, a "specific surface area" is measured through a BET method, and specifically may be calculated from an amount of nitrogen gas adsorbed at a liquid nitrogen temperature (77K) using BELSORP-mino II from BEL JAPAN, INC.

The term "carbon nanotube" used herein is a secondary structure formed by aggregating carbon nanotube units such that carbon nanotube units are fully or partially bundled, and The carbon nanotube unit has graphite sheets in a cylinder form with nano-sized diameters and having sp² bond structures. In this case, according to the rolling angles and structures of the graphite sheets, the carbon nanotube units show conductive or semiconductive characteristics. The carbon nanotube units may be classified into single-walled carbon nanotubes (SWCNT), double-walled carbon nanotubes (DWCNT), and multi-walled carbon nanotubes (MWCNT) according to the number of bonds forming walls.

The present invention provides a method for preparing a fuel cell catalyst electrode, specifically a fuel cell catalyst electrode for preparing a fuel cell negative electrode.

According to an embodiment of the present invention, the fuel cell catalyst electrode includes a catalyst layer including a catalyst, a binder, carbon nanotubes, and carbon nanofibers, the carbon nanotubes have an average length of 100 nm to 1 µm, the carbon nanofibers have an average length of 7 µm to 50 µm, and the fuel cell catalyst electrode includes the carbon nanofibers in an amount of 7.5 to 11 parts by weight with respect to 100 parts by weight of the catalyst.

In the fuel cell catalyst electrode according to an embodiment of the present invention, the catalyst may include a first catalyst and a second catalyst.

The first catalyst may include a catalyst metal and porous activated carbon having the catalyst metal supported thereon, and the porous activated carbon may include at least one selected from the group consisting of carbon black, graphite, graphene, activated carbon, and porous carbon.

In the fuel cell catalyst electrode according to an embodiment of the present invention, the first catalyst may have the catalyst metal supported thereon in an amount of 10 parts by weight to 150 parts by weight, 30 parts by weight to 120 parts by weight, or 50 parts by weight to 100 parts by weight, with respect to 100 parts by weight of the porous activated carbon, and when the above range is satisfied, the support element may produce sufficient electrode stability and ion conductivity and also induce the effect of improving catalyst reaction activity to a suitable extent.

The first catalyst may include platinum or a platinum-based alloy, and the platinum-based alloy may be an alloy of platinum and at least one selected from gold, silver, copper, palladium, tin, iridium, rhodium, ruthenium, iron, cobalt, nickel, chromium, tungsten, manganese, and vanadium. Specifically, the first catalyst may include a platinum-based alloy represented by Pt-M, where Pt may be platinum and M may be at least one selected from gold, silver, copper, palladium, tin, iridium, rhodium, ruthenium, iron, cobalt, nickel, chromium, tungsten, manganese, and vanadium.

In the fuel cell catalyst electrode according to an embodiment of the present invention, the second catalyst may include a catalyst metal and carbon nanotubes, and specifically, may include a catalyst metal and carbon nanotubes having the catalyst metal supported thereon. In the second catalyst, the catalyst metal may be attached to and supported on sidewalls of the carbon nanotubes.

According to an embodiment of the present invention, the second catalyst may have the catalyst metal supported thereon in an amount of 10 parts by weight to 150 parts by weight, 30 parts by weight to 120 parts by weight, or 50 parts by weight to 100 parts by weight, with respect to 100 parts by weight of the carbon nanotubes, and when the above range is satisfied, the support element may produce sufficient electrode stability and ion conductivity and also induce the effect of improving catalyst reaction activity to a suitable extent.

The second catalyst may include platinum or a platinum-based alloy, and the platinum-based alloy may be an alloy of platinum and at least one selected from gold, silver, copper, palladium, tin, iridium, rhodium, ruthenium, iron, cobalt, nickel, chromium, tungsten, manganese, and vanadium. Specifically, the second catalyst may include a platinum-based alloy represented by Pt-M, where Pt may be platinum and M may be at least one selected from gold, silver, copper, palladium, tin, iridium, rhodium, ruthenium, iron, cobalt, nickel, chromium, tungsten, manganese, and vanadium.

According to an embodiment of the present invention, the first catalyst and the second catalyst may be in a weight ratio of 100:5 to 100, specifically in a weight ratio of 100:10 to 80, more specifically in a weight ratio of 100:10 to 70.

According to an embodiment of the present invention, when the first catalyst and the second catalyst are included together and the above weight ratio is satisfied, an excellent catalyst reaction may be obtained, excellent output may be shown in a high current region, and excellent water discharge characteristics may be achieved.

The catalyst layer of the fuel cell catalyst electrode according to the present invention may include the first catalyst, the second catalyst, and carbon nanofibers all together in addition to the carbon nanotubes having the second catalyst supported thereon. The carbon nanofibers may be shown to be relatively larger in size than the carbon nanotubes having the second catalyst supported thereon and the porous activated carbon on which the first catalyst may be supported.

The fuel cell catalyst electrode according to an embodiment of the present invention includes the carbon nanofibers along, which are relatively larger in size than the carbon nanotubes and the porous activated carbon, in the catalyst electrode, and thus allows the catalyst, the carbon nanofibers, and the porous activated carbon to form an electrode structure around the carbon nanofibers, and accordingly may improve crystallinity and robustness of an electrode to suppress crack generation of the electrode and remove cracks.

The carbon nanofibers may be distinguished from carbon nanotubes by length. The carbon nanotubes may have an average length of 100 nm to 1 µm, and the carbon nanofibers may have an average length of 7 µm to 50 µm.

The carbon nanotubes may specifically have an average length of 100 nm to 700 nm, and more specifically 200 nm to 500 nm.

In addition, the carbon nanotubes may have an average diameter of 5 nm to 100 nm, specifically 10 nm to 80 nm, and more specifically 20 nm to 60 nm.

The carbon nanofibers may specifically have an average length of 7 µm to 30 µm, more specifically 7 µm to 20 µm. When the carbon nanofibers satisfy the average length range described above, cracks in the electrode layer that may be formed at intervals of several µm may be suppressed, and cracks that may be formed in the electrode layer may be removed.

The lengths of the carbon nanotubes and carbon nanofibers may be measured using a scanning electron microscope (SEM).

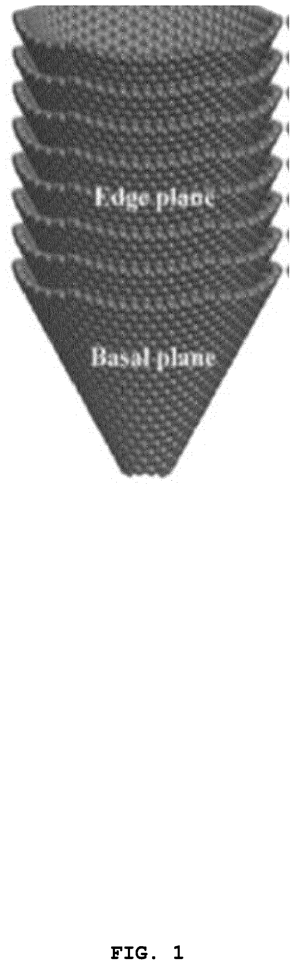

The carbon nanofibers may be herringbone-type carbon nanofibers as shown in FIG. 1.

In addition, the carbon nanofibers may have an average diameter of 100 nm to 200 nm, specifically 100 nm to 180 nm, and more specifically 100 nm to 150 nm.

In addition, the carbon nanofibers may have a specific surface area of 30 to 80 m²/g, specifically 35 to 75 m²/g, and more specifically, 40 to 70 m²/g.

The carbon nanofibers have a larger average diameter and a smaller specific surface area than the carbon nanotubes, and when the carbon nanofibers satisfy the average diameter and specific surface area, in the preparation of the catalyst slurry, using the first catalyst, the second catalyst, the carbon nanotubes, and the carbon nanofibers, the above effect resulting from the use of the carbon nanofibers may be achieved without affecting the physical properties of the catalyst slurry.

The fuel cell catalyst electrode according to an embodiment of the present invention may include the carbon nanofibers in an amount of 7.5 parts by weight to 11.5 parts by weight, specifically 7.5 parts by weight, 8 parts by weight, 8.5 parts by weight, or 9 parts by weight or more, 11.5 parts by weight, 11 parts by weight, 10.5 parts by weight, or 10 parts by weight or less, with respect to 100 parts by weight of the catalyst including the first catalyst and the second catalyst.

In the fuel cell catalyst electrode according to the present invention, when the carbon nanotubes and the carbon nanofibers satisfy the amount described above, a cross-link may be formed between the carbon nanotubes and the carbon nanofibers included in the second catalyst, the catalyst electrode may have improved binding properties, and the generation of cracks in the electrode layer may be suppressed. When the amount of the carbon nanotubes is less than the above range, cracks may be generated in the prepared electrode layer, and when the amount of the carbon nanotubes is greater than the above range, the carbon nanotubes may be aggregated to form coarse particles.

The binder may be an ion conductive polymer. As a specific example, the ion conductive polymer may be a polymer having a cation exchange group selected from the group consisting of a sulfonic acid group, a carboxylic acid group, a phosphoric acid group, a phosphonic acid group, and a derivative thereof in a side chain.

According to an embodiment of the present invention, the ion conductive polymer may be at least one ion conductive polymer selected from the group consisting of a fluorine-based polymer, a benzimidazole-based polymer, a polyimide-based polymer, a polyetherimide-based polymer, a polyphenylene sulfide-based polymer, a polysulfone-based polymer, a polyethersulfone-based polymer, a polyether ketone-based polymer, a polyether-ether ketone-based polymer, and a polyphenylquinoxaline-based polymer.

According to an embodiment of the present invention, the ion conductive polymer may be poly(perfluorosulfonic acid), poly(perfluorocarboxylic acid), or a copolymer of tetrafluoroethylene and fluorovinyl ether including a sulfonic acid group. In addition, the ion conductive polymer may be an ion conductive polymer in which a cation exchange group selected from the group consisting of a sulfonic acid group, a carboxylic acid group, a phosphoric acid group, a phosphonic acid group, and a derivative thereof is bonded to a side chain in one polymer among aryl ketone, poly(2,2'-m-phenylene)-5,5'-bibenzimidazole, and poly(2,5-benzimidazole).

According to an embodiment of the present invention, the binder may be of one type or a mixture of two or more types, and may further contain a non-conductive compound when necessary. In this case, adhesion to a polymer electrolyte membrane may be further improved. In this case, the non-conductive compound may be at least one selected from the group consisting of polytetrafluoroethylene (PTFE), a tetrafluoroethylene-hexafluoropropylene copolymer (FEP), a tetrafluoroethylene-perfluoroalkylvinylether copolymer (PFA), ethylene/tetrafluoroethylene (ETFE), an ethylene chlorotrifluoroethylene copolymer (ECTFE), polyvinylideneflu-4-oride, a copolymer (PVdF-HFP) of polyvinylidenefluoride-hexafluoropropylene, dodecylbenzenesulfonic acid, and sorbitol.

In addition, the present invention provides a method for preparing the fuel cell catalyst electrode.

The method for preparing the fuel cell catalyst electrode according to the present invention includes supporting a catalyst metal on porous activated carbon to prepare a first catalyst (S10), supporting a catalyst metal on carbon nanotubes to prepare a second catalyst (S11), dispersing and mixing a catalyst comprising a first catalyst and a second catalyst, a binder, and carbon nanofibers in a solvent to prepare a catalyst slurry (S20), and applying the catalyst slurry onto a substrate to form a catalyst layer (S30), the carbon nanofibers are mixed in an amount of 7.5 parts by weight to 11.5 parts by weight with respect to 100 parts by weight of the catalyst, the carbon nanotubes have an average length of 100 nm to 1 µm, and the carbon nanofibers have an average length of 7 µm to 50 µm.

The step (S10) is a step of supporting a catalyst metal on porous activated carbon to prepare a first catalyst.

According to an embodiment of the present invention, the catalyst may include platinum or a platinum-based alloy, and the platinum-based alloy may be an alloy of platinum and at least one selected from gold, silver, copper, palladium, tin, iridium, rhodium, ruthenium, iron, cobalt, nickel, chromium, tungsten, manganese, and vanadium. Specifically, the first catalyst may include a platinum-based alloy represented by Pt-M, where Pt may be platinum and M may be at least one selected from gold, silver, copper, palladium, tin, iridium, rhodium, ruthenium, iron, cobalt, nickel, chromium, tungsten, manganese, and vanadium.

The porous activated carbon may include at least one selected from the group consisting of carbon black, graphite, graphene, activated carbon, and porous carbon.

The step (S11) is a step of supporting a catalyst metal on carbon nanotubes to prepare a second catalyst.

According to an embodiment of the present invention, the second catalyst may include platinum or a platinum-based alloy, and the platinum-based alloy may be an alloy of platinum and at least one selected from gold, silver, copper, palladium, tin, iridium, rhodium, ruthenium, iron, cobalt, nickel, chromium, tungsten, manganese, and vanadium. Specifically, the first catalyst may include a platinum-based alloy represented by Pt-M, where Pt may be platinum and M may be at least one selected from gold, silver, copper, palladium, tin, iridium, rhodium, ruthenium, iron, cobalt, nickel, chromium, tungsten, manganese, and vanadium.

The carbon nanotubes may have an average length of 100 nm to 1 µm, specifically 100 nm to 700 nm, and more specifically 200 nm to 500 nm.

In addition, the carbon nanotubes may have an average diameter of 5 to 100 nm, specifically 10 nm to 80 nm, and more specifically 20 nm to 60 nm.

The step (S20) is a step of dispersing and mixing the first catalyst, the second catalyst, the binder, and the carbon nanofibers in a solvent to prepare a catalyst slurry.

In an embodiment of the present invention, in the step (S20), the first catalyst prepared in the step (S10), the second catalyst prepared in the step (S11), the binder, and the carbon nanofibers are dispersed and mixed in a solvent to prepare a catalyst slurry.

In the method for preparing the fuel cell catalyst electrode according to an embodiment of the present invention, the amount of the second catalyst dispersed and mixed in the solvent may be determined according to the amount of carbon nanotubes included in the second catalyst.

According to an embodiment of the present invention, the binder may be an ion conductive polymer. As a specific example, the ion conductive polymer may be a polymer having a cation exchange group selected from the group consisting of a sulfonic acid group, a carboxylic acid group, a phosphoric acid group, a phosphonic acid group, and a derivative thereof in a side chain.

According to an embodiment of the present invention, the ion conductive polymer may be at least one ion conductive polymer selected from the group consisting of a fluorine-based polymer, a benzimidazole-based polymer, a polyimide-based polymer, a polyetherimide-based polymer, a polyphenylene sulfide-based polymer, a polysulfone-based polymer, a polyethersulfone-based polymer, a polyether ketone-based polymer, a polyether-ether ketone-based polymer, and a polyphenylquinoxaline-based polymer.

According to an embodiment of the present invention, the ion conductive polymer may be poly(perfluorosulfonic acid), poly(perfluorocarboxylic acid), or a copolymer of tetrafluoroethylene and fluorovinyl ether including a sulfonic acid group. In addition, the ion conductive polymer may be an ion conductive polymer in which a cation exchange group selected from the group consisting of a sulfonic acid group, a carboxylic acid group, a phosphoric acid group, a phosphonic acid group, and a derivative thereof is bonded to a side chain in one polymer among aryl ketone, poly(2,2'-m-phenylene)-5,5'-bibenzimidazole, and poly(2,5-benzimidazole).

According to an embodiment of the present invention, the binder may be of one type or a mixture of two or more types, and may further contain a non-conductive compound when necessary. In this case, adhesion to a polymer electrolyte membrane may be further improved. In this case, the non-conductive compound may be at least one selected from the group consisting of polytetrafluoroethylene (PTFE), a tetrafluoroethylene-hexafluoropropylene copolymer (FEP), a tetrafluoroethylene-perfluoroalkylvinylether copolymer (PFA), ethylene/tetrafluoroethylene (ETFE), an ethylene chlorotrifluoroethylene copolymer (ECTFE), polyvinylideneflu-4-oride, a copolymer (PVdF-HFP) of polyvinylidenefluoride-hexafluoropropylene, dodecylbenzenesulfonic acid, and sorbitol.

According to an embodiment of the present invention, the solvent may be a dispersant for mixing and dispersing the first catalyst, the second catalyst, the binder, and the carbon nanofibers in the preparation of the catalyst slurry. As a specific example, the solvent may be an aqueous solvent or an organic solvent. The aqueous solvent may include water, alcohol, or a mixture thereof. The alcohol may be at least one selected from primary alcohols such as ethanol and isopropyl alcohol; and polyols such as ethylene glycol, propylene glycol, 1,3-butylene glycol, and dipropylene glycol. In addition, the organic solvent may be at least one selected from the group consisting of N-methyl-2-pyrrolidone (NMP), N,N-dimethylacetamide (DMAc), and N,N-dimethylformamide (DMF).

According to an embodiment of the present invention, the first catalyst and the second catalyst may be dispersed in the solvent in a weight ratio of 100:5 to 100, specifically in a weight ratio of 100:10 to 80, more specifically in a weight ratio of 100:10 to 70.

According to an embodiment of the present invention, when the first catalyst and the second catalyst are included together and the above weight ratio is satisfied, an excellent catalyst reaction may be obtained, excellent output may be shown in a high current region, and excellent water discharge characteristics may be achieved.

The step (S30) is a step of coating the catalyst slurry on a substrate to form a catalyst layer.

In the step (S30), the catalyst slurry is coated or transferred onto a substrate to prepare an electrode having a catalyst layer formed therein, which is a step for obtaining a fuel cell catalyst electrode.

In the method for preparing the fuel cell catalyst electrode according to an embodiment of the present invention, the step (S30) may include a step of drying for drying the solvent included in the catalyst slurry or a step of heat treatment for volatilizing the solvent.

According to an embodiment of the present invention, the substrate is a support layer for preparing a fuel cell catalyst electrode from the catalyst slurry, and any substrate that may be used for a fuel cell catalyst electrode may be used without particular limitation. In addition, the substrate may be a polymer electrolyte membrane itself in some cases.

In the method for preparing the fuel cell catalyst electrode according to the present invention, in the step (S20) of preparing the catalyst slurry, the carbon nanofibers may be used to satisfy the amount described above with respect to 100 parts by weight of the catalyst, and when the amount is satisfied, a cross-link may be formed between the carbon nanotubes and the carbon nanofibers included in the second catalyst, the catalyst electrode may have improved binding properties, and the generation of cracks in the electrode layer may be suppressed. When the amount of the carbon nanofibers is less than the above range, cracks may be generated in the prepared electrode layer, and when the amount of the carbon nanofibers is greater than the above range, the carbon nanofibers may be aggregated to form coarse particles.

The fuel cell catalyst electrode may exhibit excellent catalyst reaction, may exhibit excellent output in a high current region, and may exhibit excellent lifespan because the electrode layer does not have cracks caused therein or does not have cracks formed therein during use.

In addition, the present invention provides a membrane electrode assembly including the polymer electrolyte membrane. The membrane electrode assembly may include a negative electrode, a positive electrode, and a polymer electrolyte membrane interposed between the negative electrode and the positive electrode, and the positive electrode may be the fuel cell catalyst electrode according to the present invention.

According to an embodiment of the present invention, the membrane electrode assembly may be an assembly of an electrode in which an electrochemical catalyst reaction of fuel such as hydrogen gas and air containing oxygen takes place and a polymer electrolyte membrane in which hydrogen ion transfer takes place, and may be in the form that the negative electrode, the positive electrode, and the polymer electrolyte membrane interposed between the negative electrode and the positive electrode adhere to one another.

According to an embodiment of the present invention, the membrane electrode assembly may have a gas diffusion layer introduced onto one surface of each of the negative electrode (the fuel electrode or the hydrogen electrode) supplying a reaction gas and the positive electrode (the oxygen electrode or the air electrode). As a specific example, the membrane electrode assembly may be interposed between the gas diffusion layers introduced onto one surface of each of the negative electrode and the positive electrode.

According to an embodiment of the present invention, the membrane electrode assembly may have the catalyst layer introduced onto the other surface of each of the negative electrode (the fuel electrode or the hydrogen electrode) supplying the reaction gas and the positive electrode (the oxygen electrode or the air electrode). As a specific example, the polymer electrolyte membrane may be interposed between the catalyst layers introduced onto one surface of each of the negative electrode and the positive electrode.

According to an embodiment of the present invention, the membrane electrode assembly may be a stacked structure having one type of stack configuration selected from the group consisting of the negative electrode/the polymer electrolyte membrane/the positive electrode, the gas diffusion layer/the negative electrode/the polymer electrolyte membrane/the positive electrode, the negative electrode/the polymer electrolyte membrane/the positive electrode/the gas diffusion layer, the gas diffusion layer/the negative electrode/the polymer electrolyte membrane/the positive electrode/the gas diffusion layer, the negative electrode/the catalyst layer/the polymer electrolyte membrane/the positive electrode, the negative electrode/the polymer electrolyte membrane/the catalyst layer/the positive electrode, the negative electrode/the catalyst layer/the polymer electrolyte membrane/the catalyst layer/the positive electrode, the gas diffusion layer/the catalyst layer/the negative electrode/the polymer electrolyte membrane/the positive electrode, the gas diffusion layer/the negative electrode/the polymer electrolyte membrane/the catalyst layer/the positive electrode, the gas diffusion layer/the catalyst layer/the negative electrode/the polymer electrolyte membrane/the catalyst layer/the positive electrode, the negative electrode/the polymer electrolyte membrane/the catalyst layer/the positive electrode/the gas diffusion layer, the negative electrode/the catalyst layer/the polymer electrolyte membrane/the positive electrode/the gas diffusion layer, the negative electrode/the catalyst layer/the polymer electrolyte membrane/the catalyst layer/positive electrode/the gas diffusion layer, and the gas diffusion layer/the catalyst layer/the negative electrode/the polymer electrolyte membrane/the catalyst layer/the positive electrode/the gas diffusion layer.

According to an embodiment of the present invention, the negative electrode may be the fuel cell catalyst electrode described above, and accordingly, the catalyst layer may be the catalyst layer of the fuel cell catalyst electrode described above.

According to an embodiment of the present invention, the catalyst layer of the positive electrode may include a catalyst metal and a conductive material having the catalyst metal supported thereon. The catalyst of the positive electrode may include a metal that promotes a reduction reaction of oxygen, and may be, as a specific example, platinum, gold, silver, palladium, iridium, rhodium, ruthenium, iron, cobalt, nickel, chromium, tungsten, manganese, vanadium, and an alloy thereof. In addition, the conductive material may be activated carbon. In addition, the catalyst layer of the positive electrode may include the same ion conductive polymer as the binder of the fuel cell catalyst electrode as the binder.

According to an embodiment of the present invention, the polymer electrolyte membrane may be the ion conductive polymer, and may be the same ion conductive polymer as the binder of the fuel cell catalyst electrode described above. As another example, the ion conductive polymer may be an ion conductive polymer containing a sulfonic acid group.

According to an embodiment of the present invention, the ion conductive polymer containing the sulfonic acid group may be in the form that at least one selected from the group consisting of a fluorine-based polymer, a hydrocarbon-based polymer, and a partially fluorine-based polymer is sulfonated, and in this case, hydrogen ion conductivity and reaction gas barrier properties are excellent.

According to an embodiment of the present invention, the sulfonated fluorine-based polymer may be at least one selected from the group consisting of poly(perfluorosulfonic acid), poly(perfluorocarboxylic acid), and a copolymer of tetrafluoroethylene and fluorovinyl ether containing the sulfonic acid group.

According to an embodiment of the present invention, the sulfonated hydrocarbon-based polymer may be at least one selected from the group consisting of sulfonated polyimide, sulfonated polyaryl ether sulfone, sulfonated polyether ether ketone, sulfonated polybenzimidazole, sulfonated polysulfone, sulfonated polystyrene, sulfonated polyphosphazene, sulfonated polyetherethersulfone, sulfonated polyethersulfone, sulfonated polyetherbenzimidazole, sulfonated polyarylene ether ketone, sulfonated polyether ketone, sulfonated polystyrene, sulfonated polyimidazole, sulfonated polyetherketoneketone, and sulfonated polyaryletherbenzimidazole.

According to an embodiment of the present invention, the sulfonated partially fluorine-based polymer may be at least one selected from the group consisting of sulfonated poly(aryleneethersulfone-co-vinylidenefluoride), sulfonated trifluorostyrene-graft-poly(tetrafluoroethylene), and styrene-grafted sulfonated polyvinylidene fluoride.

According to an embodiment of the present invention, the membrane electrode assembly may be prepared through compression such as thermocompression, in a state in which the negative electrode, the positive electrode, and the polymer electrolyte membrane interposed between the negative electrode and the positive electrode are in close contact with one another. In addition, the membrane electrode assembly may be prepared by directly applying and drying a catalyst layer slurry for forming the catalyst layers of the negative electrode and the positive electrode on one surface or both surfaces of the polymer electrolyte membrane.

According to an embodiment of the present invention, the gas diffusion layer may have a double-layer structure of a micro-porous layer (MPL) and a macro-porous substrate. The micro-porous layer may be prepared by mixing carbon powder, such as acetylene black carbon and black pearls carbon, with a polytetrafluoroethylene (PTFE)-based hydrophobic agent, and then, may be applied onto one surface or both surfaces of the macro-porous substrate depending on the usage. The macro-porous substrate may be composed of carbon fiber and a polytetrafluoroethylene-based hydrophobic agent. As a specific example, carbon fibers such as carbon fiber cloth, carbon fiber felt, and carbon fiber paper may be used.

In addition, the present invention provides a fuel cell including the membrane electrode assembly. The fuel cell may include a stack, a fuel supply portion, and an oxidant supply portion.

According to an embodiment of the present invention, the stack may include one or at least two membrane electrode assemblies, and when the at least two membrane electrode assemblies are included, a bipolar plate interposed therebetween may be included. The bipolar plate delivers a fuel and an oxidizer supplied from the outside to the membrane electrode assemblies, and at the same time, serves as a conductor that connects the negative electrode and the positive electrode in series.

According to an embodiment of the present invention, the fuel supply portion may supply the fuel to the stack, and may include a fuel tank for storing the fuel and a pump for supplying the fuel stored in the fuel tank to the stack. As the fuel, a gas or liquid hydrogen or hydrocarbon fuel may be used, and examples of the hydrocarbon fuel may include alcohol such as methanol, ethanol, propanol, and butanol, or natural gas.

According to an embodiment of the present invention, the oxidizing agent supply portion may supply an oxidizing agent to the stack. As the oxidizing agent, air may be typically used, and oxygen or air may be used by being injected via the pump.

According to an embodiment of the present invention, the fuel cell may be a polymer electrolyte membrane fuel cell, a direct liquid fuel cell, a direct methanol fuel cell, a direct formic acid fuel cell, a direct ethanol fuel cell, a direct dimethyl ether fuel cell, or the like.

In addition, the fuel cell may be a fuel cell for building power generation.

Hereinafter, examples of the present invention will be described in detail in such a manner that it may easily be performed by a person with ordinary skill in the art to which the present invention pertains. The present invention may, however, be embodied in many different forms, and is not limited to Examples set forth herein.

### Example 1

A catalyst including a Pt/C catalyst in an amount of 50 wt%(Pt:C in a weight ratio of 1:1, Tanaka Kikinzoku Kogyo KK) and a Pt-CNT catalyst in a weight ratio of 85:15, and 10 parts by weight of carbon nanofibers having an aspect ratio of 90 and an average length of 10 µm with respect to 100 parts by weight of the catalyst were mixed to prepare a catalyst composition.

13.6 parts by weight of the catalyst composition and 4.1 parts by weight of an ionomer (Asahi Kasei Co.) as a binder were added to 100 parts by weight of the solvent in which dipropylene glycol and water were mixed in a weight ratio of 1:1, and then uniformly dispersed and mixed using a 3-roll mill to prepare a catalyst slurry.

The prepared catalyst slurry was applied onto a fluorinated polyimide (FPI, FM2 Co.) film at 0.05 mg/cm² and dried at 60 °C for 2 hours using a drying oven to prepare a fuel cell catalyst electrode.

### Example 2

A fuel cell catalyst electrode was prepared in the same manner as in Example 1, except that carbon nanofibers having an aspect ratio of 45 and a length of 7 µm were used as the carbon nanofibers mixed in the catalyst composition from Example 1.

### Example 3

A fuel cell catalyst electrode was prepared in the same manner as in Example 1, except that the mixing amount of the carbon nanofibers mixed in the catalyst composition from Example 1 was changed to 9 parts by weight.

### Example 4

A fuel cell catalyst electrode was prepared in the same manner as in Example 1, except that carbon nanofibers having an aspect ratio of 45 and a length of 7 µm were used as the carbon nanofibers mixed in the catalyst composition from Example 1, and the mixing amount of the carbon nanofibers was changed to 9 parts by weight.

### Comparative Example 1

A fuel cell catalyst electrode was prepared in the same manner as in Example 1, except that carbon nanofibers having an aspect ratio of 34 and a length of 6 µm were used as the carbon nanofibers mixed in the catalyst composition from Example 1.

### Comparative Example 2

A fuel cell catalyst electrode was prepared in the same manner as in Example 1, except that carbon nanofibers having an aspect ratio of 20 and a length of 3 µm were used as the carbon nanofibers mixed in the catalyst composition from Example 1.

### Comparative Example 3

A fuel cell catalyst electrode was prepared in the same manner as in Example 1, except that the mixing amount of the carbon nanofibers mixed in the catalyst composition from Example 1 was changed to 3 parts by weight.

### Comparative Example 4

A fuel cell catalyst electrode was prepared in the same manner as in Example 1, except that the mixing amount of the carbon nanofibers mixed in the catalyst composition from Example 1 was changed to 7 parts by weight.

### Comparative Example 5

A fuel cell catalyst electrode was prepared in the same manner as in Example 1, except that the mixing amount of the carbon nanofibers mixed in the catalyst composition from Example 1 was changed to 12 parts by weight.

### Comparative Example 6

A fuel cell catalyst electrode was prepared in the same manner as in Example 1, except that carbon nanofibers were not mixed in the catalyst composition from Example 1.

### Comparative Example 7

A fuel cell catalyst electrode was prepared in the same manner as in Example 1, except that the Pt-CNT catalyst was not used in the catalyst composition from Example 1.

### Experimental Example

For the fuel cell catalyst electrodes prepared in the above Examples and Comparative Examples, images of cross-sections and surfaces of the electrodes were obtained using a scanning electron microscope (SEM), and used to observe the presence of cracks.

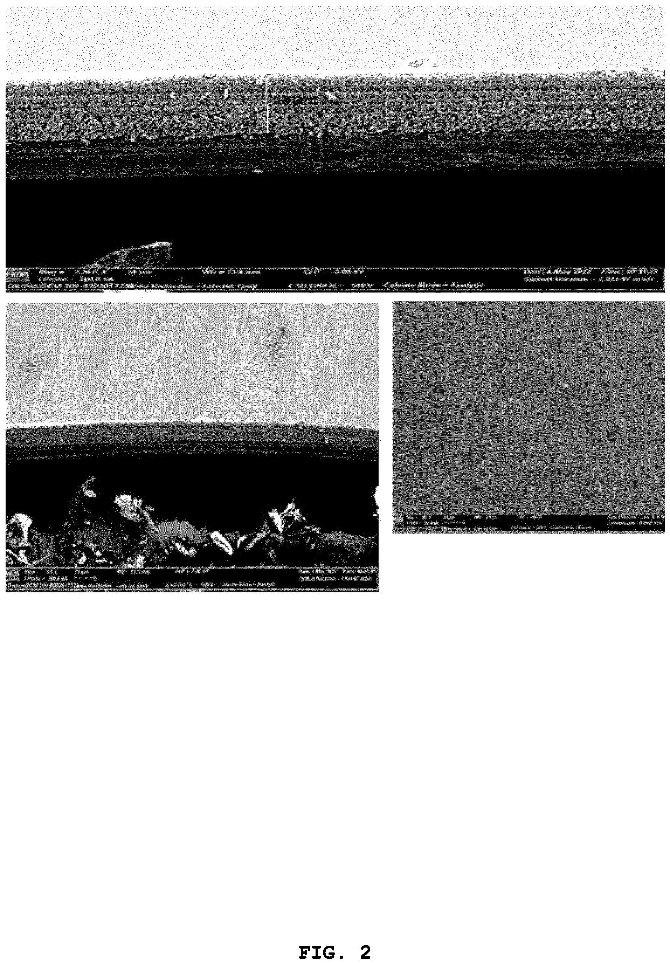

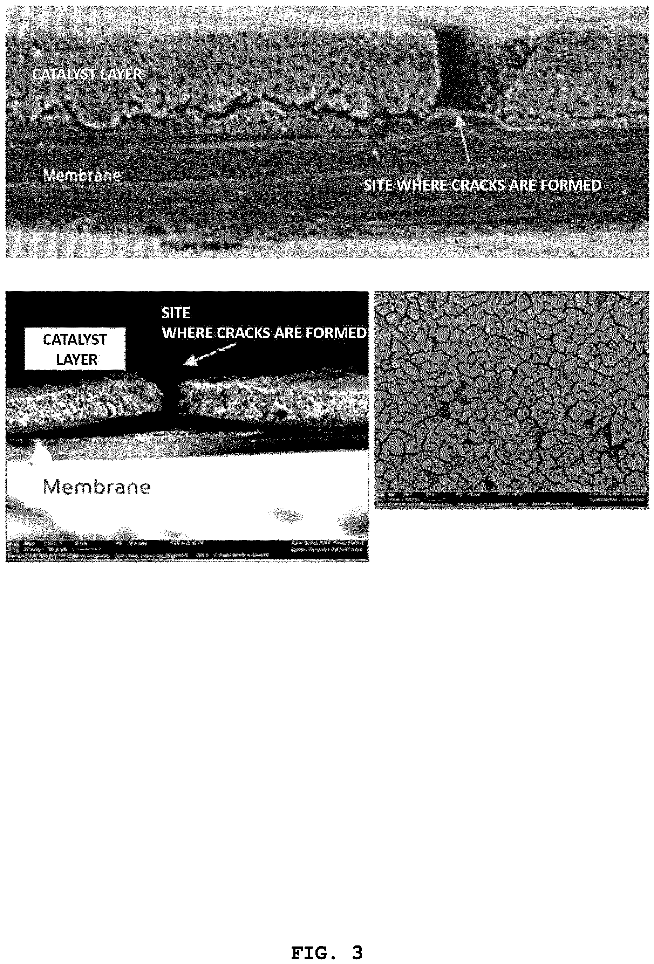

FIG. 2 shows an SEM image of the electrode of Example 1, FIG. 3 shows an SEM image of the electrode of Comparative Example 1, and Table 1 shows whether cracks were formed in catalyst layers in the catalyst electrodes of Examples 1 to 4 and Comparative Examples 1 to 7.

**[Table 1]**

| | 1st catalyst: 2nd catalyst (weight ratio) | Carbon nanofibers | | | Presence of cracks |
|---|---|---|---|---|---|
| | | (Parts by weight) | Length (µm) | Aspect ratio | |
| Example 1 | 85:15 | 10 | 10 | 90 | × |
| Example 2 | 85:15 | 10 | 7 | 45 | × |
| Example 3 | 85:15 | 9 | 10 | 90 | × |
| Example 4 | 85:15 | 9 | 7 | 45 | × |
| Comparative Example 1 | 85:15 | 10 | 6 | 34 | Observed |
| Comparative Example 2 | 85:15 | 10 | 3 | 20 | Observed |
| Comparative Example 3 | 85:15 | 3 | 10 | 90 | Observed |
| Comparative Example 4 | 85:15 | 7 | 10 | 90 | Observed |
| Comparative Example 5 | 85:15 | 12 | 10 | 90 | × (Formation of coarse particles) |
| Comparative Example 6 | 85:15 | 0 | - | - | Observed |
| Comparative Example 7 | 100:0 | 10 | 10 | 90 | Observed |

When referring to the SEM image of the electrode of Comparative Example 1 in FIG. 3 first in order to determine whether cracks were formed in the catalyst layer, through the SEM images of the cross-sections of the electrode shown at the top and bottom left, it was confirmed that the electrode prepared in Comparative Example 1 had cracks formed in the catalyst layer formed on the electrolyte membrane (membrane). In addition, through the SEM image of a surface of the electrode catalyst layer shown at the bottom right of FIG. 3, it was confirmed that the cracks were generated over the entire range of the catalyst layer.

On the other hand, when referring to the SEM image of the electrode of Example 1 in FIG. 2, through the SEM images of the cross-sections of the electrode shown at the top and bottom left, it was confirmed that the electrode prepared in Example 1 had no cracks formed in the catalyst layer formed on the electrolyte membrane (membrane). In addition, through the SEM image of a surface of the electrode catalyst layer shown at the bottom right of FIG. 2, it was confirmed that the catalyst layer of Example 1 had no cracks and had a smooth surface formed thereon.

Similar to the analysis of the electrode catalyst layers of Example 1 and Comparative Example 1 through SEM images, Table 1 shows the results by adding the results of observing the surface morphology of the catalyst layer, and the crack formation in the catalyst layer for each electrode of Examples 2 to 4 and the electrodes of Comparative Examples 2 to 7.

Referring to Table 1, it was confirmed no cracks were formed on the catalyst layers in Examples 1 to 4, but cracks were formed on the catalyst layers in Comparative Examples 1 to 4, 6 and 7.

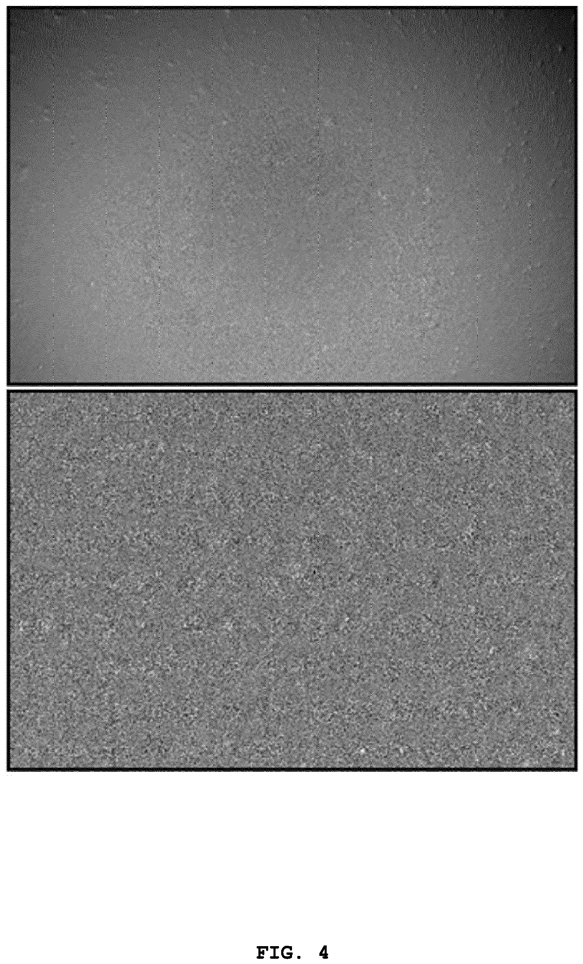

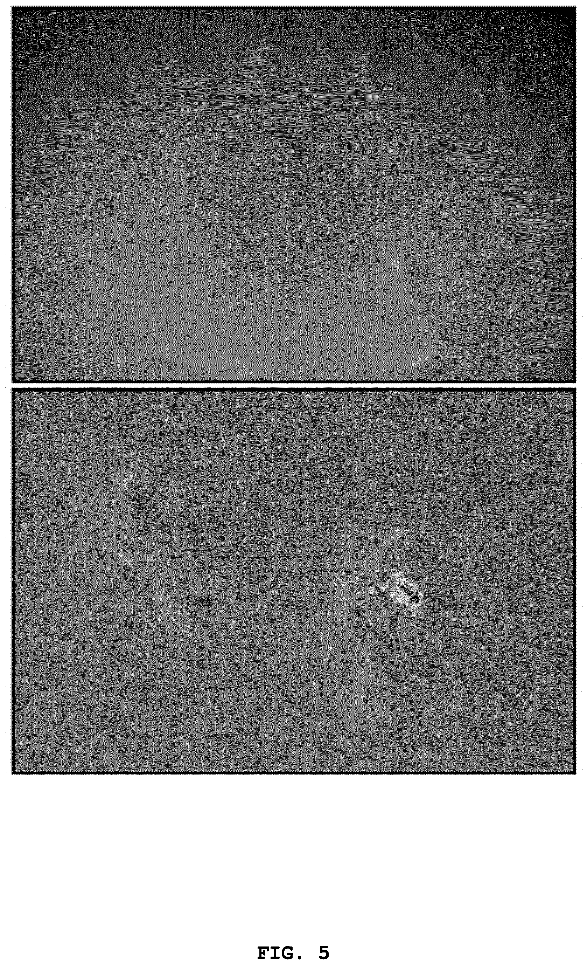

As for Comparative Example 5, no cracks were formed on the catalyst layer, but it was confirmed that particles were included on the catalyst layer. In this connection, FIG. 4 shows an SEM image of a surface of the electrode layer of the electrode of Example 1, and FIG. 5 shows an SEM image of a surface of the electrode layer of the electrode of Comparative Example 5.

As shown in FIG 4, In Example 1, it was confirmed that carbon nanofibers were evenly dispersed in the process of preparing the catalyst slurry for forming the catalyst layer of the electrode, and the catalyst layer prepared using the carbon nanofibers had a smooth surface, but in Comparative Example 5, in the process of preparing the catalyst slurry for forming the catalyst layer of the electrode, an excessive amount of carbon nanofibers were added, and the carbon nanofibers were aggregated together to form coarse particles, which were then included in the catalyst layer prepared using the carbon nanofibers, and observed on the SEM image of a surface portion.

As described above, the catalyst electrodes of Examples 1 to 4 according to an embodiment of the present invention include a catalyst layer without cracks, and according to the method for preparing the catalyst electrode according to an embodiment of the present invention, it was confirmed that a catalyst electrode including a crack-free catalyst layer was obtainable.

In a fuel cell catalyst electrode and a method for preparing the same according to the present invention, an electrode layer includes carbon nanofibers in addition to carbon nanotubes of a catalyst, and includes the carbon nanofibers in a certain amount range, and accordingly, a fuel cell catalyst electrode having excellent catalyst activity in a positive electrode (air electrode), improved electrical conductivity, and improved electrode surface resulting from reduced crack generation in the electrode layer may be provided, and thus be usefully used for preparing a fuel cell system.

While the present invention has been shown and described in connection with the exemplary embodiments, it will be apparent to those skilled in the art that modifications and variations can be made without departing from the spirit and scope of the invention as defined by the appended claims.

## Claims

1. A fuel cell catalyst electrode comprising a catalyst layer comprising a catalyst, a binder, carbon nanotubes, and carbon nanofibers,
wherein the carbon nanotubes have an average length of 100 nm to 1 µm,
the carbon nanofibers have an average length of 7 µm to 50 µm, and
the fuel cell catalyst electrode comprises the carbon nanofibers in an amount of 7.5 to 11.5 parts by weight with respect to 100 parts by weight of the catalyst.

2. The fuel cell catalyst electrode of claim 1, wherein the catalyst comprises a first catalyst and a second catalyst,
the first catalyst comprises a catalyst metal and porous activated carbon having the catalyst metal supported thereon, and
the second catalyst comprises a catalyst metal and carbon nanotubes having the catalyst metal supported thereon.

3. The fuel cell catalyst electrode of claim 2, wherein the porous activated carbon comprises at least one selected from the group consisting of carbon black, graphite, graphene, activated carbon, and porous carbon.

4. The fuel cell catalyst electrode of claim 2 or 3, wherein the catalyst metal comprises platinum or a platinum-based alloy, and
the platinum-based alloy is an alloy of platinum and at least one selected from gold, silver, copper, palladium, tin, iridium, rhodium, ruthenium, iron, cobalt, nickel, chromium, tungsten, manganese, and vanadium.

5. The fuel cell catalyst electrode of any one of claims 1 to 4, wherein the binder is an ion conductive polymer.

6. The fuel cell catalyst electrode of any one of claims 1 to 5, wherein the carbon nanotubes have an average diameter of 5 to 100 nm.

7. The fuel cell catalyst electrode of any one of claims 1 to 6, wherein the carbon nanofibers are herringbone-type carbon nanofibers.

8. The fuel cell catalyst electrode of any one of claims 1 to 7, wherein the carbon nanofibers have an average diameter of 100 nm to 200 nm.

9. The fuel cell catalyst electrode of any one of claims 1 to 8, wherein the carbon nanofibers have a specific surface area of 30 to 80 m²/g.

10. A method for preparing a fuel cell catalyst electrode, the method comprising:
supporting a catalyst metal on porous activated carbon to prepare a first catalyst (S10);
supporting a catalyst metal on carbon nanotubes to prepare a second catalyst (S11);
dispersing and mixing a catalyst comprising the first catalyst and the second catalyst, a binder, and carbon nanofibers in a solvent to prepare a catalyst slurry (S20); and
applying the catalyst slurry onto a substrate to form a catalyst layer (S30),
wherein the carbon nanofibers are mixed in an amount of 7.5 to 11.5 parts by weight with respect to 100 parts by weight of the catalyst,
the carbon nanotubes have an average length of 100 nm to 1 µm, and
the carbon nanofibers have an average length of 7 µm to 50 µm.
